# EUROPEAN PATENT SPECIFICATION

(11) **EP 4 398 528 B1**
(45) Date of publication and mention of the grant of the patent: **04.11.2026**
(21) Application number: 21956048.9
(22) Date of filing: 03.09.2021
(51) Int. Cl.: H04L 27/20, H04W 52/20, H04W 52/24, H04W 52/52

(54) **WIRELESS COMMUNICATION SYSTEM, WIRELESS COMMUNICATION METHOD, AND WIRELESS COMMUNICATION TRANSMISSION DEVICE**
DRAHTLOSES KOMMUNIKATIONSSYSTEM, DRAHTLOSES KOMMUNIKATIONSVERFAHREN UND DRAHTLOSE KOMMUNIKATIONSÜBERTRAGUNGSVORRICHTUNG
SYSTÈME DE COMMUNICATION SANS FIL, PROCÉDÉ DE COMMUNICATION SANS FIL, ET DISPOSITIF DE TRANSMISSION DE COMMUNICATION SANS FIL

(43) Date of publication of application: 10.07.2024
(73) Proprietor: NTT, Inc., Tokyo 100-8116 (JP)
(72) Inventor: FUKUZONO, Hayato, Musashino-shi, Tokyo 180-8585 (JP); KURIYAMA, Keita, Musashino-shi, Tokyo 180-8585 (JP); YOSHIOKA, Masafumi, Musashino-shi, Tokyo 180-8585 (JP); MIYAGI, Toshifumi, Musashino-shi, Tokyo 180-8585 (JP)
(74) Representative: Hoffmann Eitle
(86) International application number: PCT/JP2021/032465
(87) International publication number: WO 2023/032160

(56) References cited:
- JP-A- 2003 046 436
- JP-A- 2017 059 889
- JP-A- 2018 182 683
- JP-A- 2020 195 095
- JP-A- H11 196 456
- US-A1- 2011 074 506
- US-B1- 8 571 497
- US-B1- 9 807 571
- US-B1- 9 807 571
- AL-ASADY H A ET AL: "High-Speed Satellite Mobile Communications: Technologies and Challenges", PROCEEDINGS OF THE IEEE, IEEE. NEW YORK, US, vol. 92, no. 2, 1 February 2004 (2004-02-01), pages 312 - 339, XP011107747, ISSN: 0018-9219, DOI: 10.1109/JPROC.2003.821907

## Description

### Technical Field

The present disclosure relates to a wireless communication system, a wireless communication method, and a wireless communication transmission device, and more particularly, to a wireless communication system, a wireless communication method, and a wireless communication transmission device using a single-carrier multi-value modulation scheme.

### Background Art

Non Patent Literature 1 below discloses a technique related to a wireless communication system using a single-carrier multi-value modulation scheme. In wireless communication using a single-carrier multi-value modulation scheme, a signal to noise ratio (SNR) can be increased as transmission power is increased.

On the other hand, an amplifier of a transmission signal exhibits a linear input-output characteristic in a region where input power is small, but generally exhibits a non-linear characteristic in a region where the power is large. For this reason, in the wireless communication, as the transmission power increases, distortion is more likely to occur in the transmission signal.

To avoid an influence of such distortion, Non Patent Literature 1 discloses a technique for keeping transmission power within a linear region of an amplifier. In this case, since distortion is not superimposed on the transmission signal, it is possible to correctly process the signal in the reception device, and it is possible to effectively prevent erroneous transmission of data.

### Citation List

### Non Patent Literature

Non Patent Literature 1: High-Speed Satellite Mobile Communications: Technologies and Challenges, MOHAMED IBNKAHLA, QUAZI MEHBUBAR RAHMAN, AHMED IYANDA SULYMAN, HISHAM ABDULHUSSEIN AL-ASADY, JUN YUAN, AND AHMED SAFWAT, p312-339, PROCEEDINGS OF THE IEEE, VOL. 92, NO. 2, February 2004

### Patent Literature

Patent Literature 1: US 2011/0074506 A1 refers to reducing power amplifier induced distortion. Power amplifier induced distortion is iteratively estimated and cancelled. When the difference between the current estimated power amplifier distortion and the previous estimated power amplifier distortion is less than a convergence threshold, particular M-OAM constellation points that are still in error are determined A M-QAM constellation point correction routine is provided that can move the incorrectly estimated constellation points that are in error towards their expected quadrants by generating updated M-QAM constellation points. The remaining estimated non-linear power amplifier induced distortion in the received signal can then be estimated and canceled.

### Summary of Invention

### Technical Problem

By the way, even if the transmission power belongs to a non-linear region of the amplifier, if the distortion superimposed on the transmission signal is not excessive, erroneous recognition of data does not occur in the reception device. On the other hand, the technique of Non Patent Literature 1 described above uniformly keeps the transmission power to the linear region of the amplifier, and can also be evaluated as imposing an excessive limitation on a capability of the amplifier.

The present disclosure has been made in view of the above problem, and a first object thereof is to provide a wireless communication system that achieves excellent communication quality by effectively utilizing a capability of an amplifier of a transmission device within a range in which erroneous recognition of data does not occur.

In addition, a second object of the present disclosure is to provide a wireless communication method that achieves excellent communication quality by effectively utilizing a capability of an amplifier of a transmission device within a range in which erroneous recognition of data does not occur.

In addition, a third object of the present disclosure is to provide a wireless communication transmission device capable of achieving excellent communication quality by effectively utilizing a capability of an amplifier within a range in which erroneous recognition of data does not occur.

### Solution to Problem

The above objects are achieved by the subject matter of the independent claims. Advantageous embodiments are disclosed in the dependent claims.

### Advantageous Effects of Invention

According to the first to third aspects, it is possible to effectively utilize the capability of the amplifier of the transmission device within a range in which erroneous recognition of data does not occur. Therefore, according to the present aspects, it is possible to achieve wireless communication having excellent quality while suppressing an amount of capital investment.

### Brief Description of Drawings

Fig. 1 is a diagram for explaining an overall configuration of a wireless communication system of a first embodiment of the present disclosure.
Fig. 2 is a diagram for explaining a configuration of a transmission device to be compared with a transmission device in the first embodiment of the present disclosure.
Fig. 3 is a diagram illustrating an input-output characteristic of an amplifier built in the transmission device.
Fig. 4 is a diagram illustrating a state in which distortion occurs in a constellation with an increase in transmission power.
Fig. 5 is a block diagram for explaining a configuration of the transmission device in the first embodiment of the present disclosure.
Fig. 6 illustrates arithmetic expressions used by the transmission device illustrated in Fig. 5 to calculate a symbol error rate SER and a bit error rate BER, respectively.
Fig. 7 is a diagram for explaining a concept of the number of nearest points α_{M}.
Fig. 8 is a diagram for explaining a concept of a minimum Euclidean distance in a constellation with distortion.
Fig. 9 is a flowchart for explaining a flow of processing executed by the transmission device to control the transmission power in the first embodiment of the present disclosure.
Fig. 10 is a block diagram for explaining a configuration of a reception device in the first embodiment of the present disclosure.
Fig. 11 is a diagram for explaining a method in which the reception device calculates a likelihood for a reception point in the first embodiment of the present disclosure.

### Description of Embodiments

### First Embodiment.

### [Overall Configuration of First Embodiment]

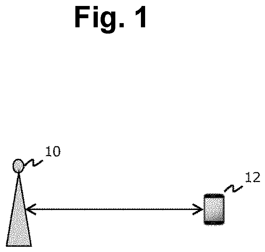

Fig. 1 illustrates an overall configuration of a wireless communication system of a first embodiment of the present disclosure. As illustrated in Fig. 1, the wireless communication system of the present embodiment includes a transmission device 10 and a reception device 12. The transmission device 10 includes, for example, a base station for mobile communication operated by a communication company, an access point of WiFi (registered trademark), or the like. In addition, the reception device 12 includes a terminal station such as a smartphone or a tablet terminal.

### [Problem Focused on by First Embodiment]

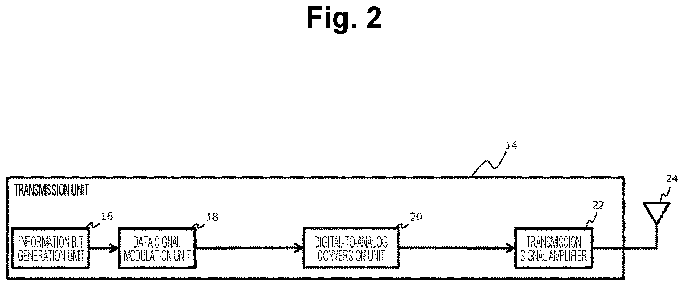

Fig. 2 is a block diagram for explaining a configuration of a transmission device 14 to be compared with the transmission device 10 in the present embodiment. The transmission device 14 of a comparative example includes an information bit generation unit 16. The information bit generation unit 16 generates information bits to be transmitted to the reception device 12. The information bit generation unit 16 may have an error correction coding function or an interleaving function.

The information bits generated by the information bit generation unit 16 are provided to a data signal modulation unit 18. The data signal modulation unit 18 modulates the provided information bits into a data signal. As a modulation scheme, for example, a modulation scheme is considered that can be used for a single-carrier multi-value modulation scheme such as quadrature amplitude modulation (QAM) or APSK.

The data signal generated by the data signal modulation unit 18 is provided to a digital-to-analog conversion unit 20. The digital-to-analog conversion unit 20 converts the digitally-modulated data signal into an analog transmission signal.

The transmission signal generated by the digital-to-analog conversion unit 20 is provided to a transmission signal amplifier 22. The transmission signal amplifier 22 amplifies the transmission signal and provides the amplified signal to an antenna 24. Then, the transmission signal is transmitted from the antenna 24 toward the reception device 12 in a form of a wireless signal.

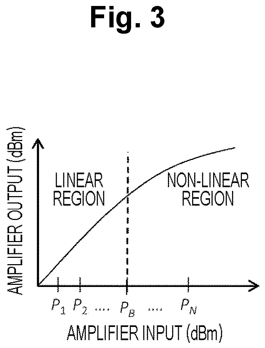

Fig. 3 illustrates an input-output characteristic of the transmission signal amplifier 22. As illustrated in Fig. 3, in a region where input power (horizontal axis) is smaller than P_{B}, output power (vertical axis) of the transmission signal amplifier 22 is proportional to the input power. Then, in a region where the input power exceeds P_{B}, a proportional relationship between them collapses. Hereinafter, a region where they have the proportional relationship is referred to as a "linear region", and a region where the proportional relationship between them collapses is referred to as a "non-linear region".

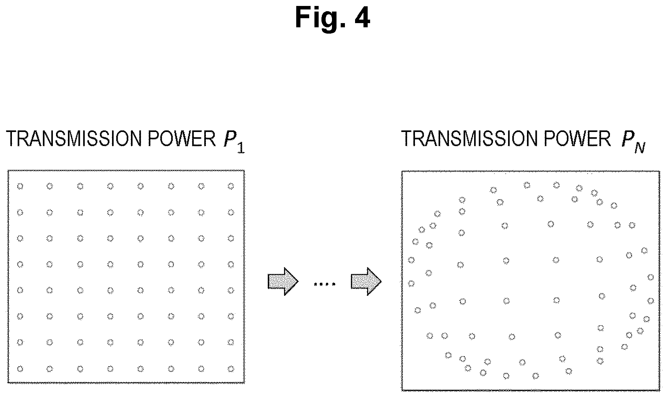

Fig. 4 illustrates a state in which distortion occurs in a constellation of 8 × 8 = 64 QAM with an increase in transmission power. In the modulation scheme of 64 QAM, 64 symbols arranged in a lattice pattern are defined by changing and adjusting amplitudes of two carrier waves independent of each other. Hereinafter, a point on constellation coordinates at which each of the 64 symbols is defined is referred to as a "signal point". In addition, a point on the constellation coordinates of each data signal to be actually transmitted is referred to as a "reception point".

In the linear region of the transmission signal amplifier 22, as illustrated on the left side (transmission power P₁) of Fig. 4, reception points form a constellation without distortion. On the other hand, in the non-linear region of the transmission signal amplifier 22, as illustrated on the right side (transmission power P_{N}) of Fig. 4, distortion is superimposed on the constellation of the reception points.

The reception device 12 performs likelihood calculation with signal points existing in the vicinity for each of the reception points included in the transmission signal, and recognizes each of the reception points as any of the 64 symbols on the basis of a result of calculation. Note that the calculation of a likelihood can be executed by, for example, a method described in the following literature.

On the Optimality of Bit Detection of Certain Digital Modulations, Marvin K. Simon and Ramesh Annavajjala, p299-307, IEEE TRANSACTIONS ON COMMUNICATIONS, VOL. 53, NO. 2, FEBRUARY 2005

If the reception device 12 performs the above likelihood calculation by using the signal points constituting the constellation without distortion, reception points generated in the linear region can be correctly recognized. However, since reception points generated in the non-linear region deviates from original positions on the constellation, the reception points cannot be correctly recognized. For this reason, when the transmission signal amplifier 22 uses the non-linear region, a situation may occur in which data is erroneously recognized in the reception device 12.

In the transmission device 14 of the comparative example, if the transmission power is limited to the linear region of the transmission signal amplifier 22, it is possible to prevent distortion from occurring in the constellation of the reception points. Thus, by applying such a limitation, it is possible to prevent erroneous recognition of data in the reception device 12. However, in that case, a situation occurs in which an amplification capability of the transmission signal amplifier 22 cannot be sufficiently utilized.

Thus, in the present embodiment, the transmission device 10 is caused to execute transmission power control by the following procedure.
1. Prediction of distortion caused in the constellation is performed on the basis of set transmission power.
2. On the basis of a result of the prediction, a symbol error rate SER or a bit error rate BER occurring in the reception device 12 is predicted.
3. The transmission power is adjusted so that SER or BER satisfies a requirement.

According to the above processing, the transmission power of the transmission device 10 is appropriately controlled so that SER or BER clears a desired value. Therefore, according to the present embodiment, it is possible to efficiently obtain good communication quality by effectively utilizing the capability of the transmission signal amplifier 22. Hereinafter, the above features will be described in more detail.

### [Features of First Embodiment]

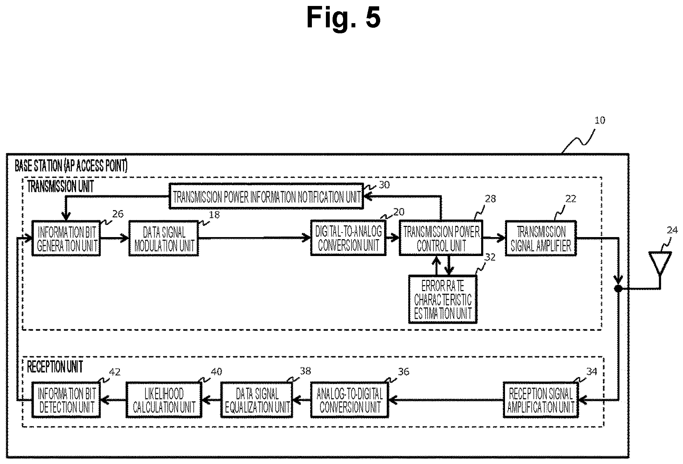

Fig. 5 is a block diagram for explaining a configuration of the transmission device 10 in the present embodiment. Note that, in Fig. 5, the same elements as those included in the transmission device 14 of the comparative example (see Fig. 2) are denoted by the same reference signs, and description thereof will be omitted or simplified.

The transmission device 10 in the present embodiment includes a transmission unit illustrated in the upper part of Fig. 5. Here, the information bit generation unit 16 in the transmission device 14 of the comparative example is replaced with an information bit generation unit 26. The information bit generation unit 26 included in the present embodiment generates information bits regarding a specification of the transmission device 10 at a stage where communication between the transmission device 10 and the reception device 12 is started. Specifically, a modulation scheme used by the transmission device 10 and the input-output characteristic of the transmission signal amplifier 22 (see Fig. 3) are converted into information bits.

The information bits generated in this manner are transmitted from the transmission device 10 to the reception device 12 at the stage where communication between the transmission device 10 and the reception device 12 is started. For this reason, in the present embodiment, the modulation scheme used by the transmission device 10 and the input-output characteristic of the transmission signal amplifier 22 are shared between both devices when communication between both devices is started.

The transmission device 10 in the present embodiment includes a transmission power control unit 28 at a preceding stage of the transmission signal amplifier 22. The transmission power control unit 28 controls the transmission power used by the transmission signal amplifier 22 to obtain desired communication quality. A control command of the transmission power control unit 28 is provided to the transmission signal amplifier 22 and is provided to a transmission power information notification unit 30.

The transmission power information notification unit 30 provides a command value of the transmission power to the information bit generation unit 26. Then, the information bit generation unit 26 generates bit information regarding current transmission power and includes the information in transmission data. As a result, from the transmission device 10 of the present embodiment, with transmission power set by the transmission power control unit 28, a transmission signal including information on the transmission power is transmitted toward the reception device 12.

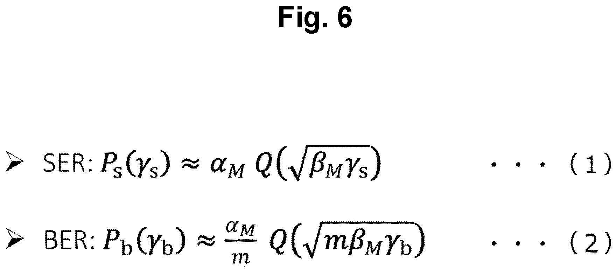

The transmission unit of the transmission device 10 further includes an error rate characteristic estimation unit 32. The error rate characteristic estimation unit 32 has a function of estimating a probability that a signal transmitted from the transmission device 10 is erroneously recognized in the reception device 12. The function related to the error rate characteristic estimation unit 32 will be described in detail later with reference to Figs. 6 to 8.

The transmission device 10 includes a reception unit illustrated in the lower part of Fig. 5. The reception unit includes a reception signal amplification unit 34 that receives supply of a reception signal from the antenna 24. The reception signal amplification unit 34 amplifies a received signal with an appropriate gain and provides the amplified signal to an analog-to-digital conversion unit 36.

The analog-to-digital conversion unit 36 is a block for demodulating a reception signal in an analog form into a digital signal. The signal digitized by the analog-to-digital conversion unit 36 is provided to a data signal equalization unit 38.

The data signal equalization unit 38 is a block that performs inverse calculation on information on an amplitude and a phase of a communication path response to obtain an estimated value of the transmission signal. A training signal is exchanged between the transmission device 10 and the reception device 12 prior to the data signal. Content of the training signal is shared in advance between the transmission device 10 and the reception device 12. For this reason, the transmission device 10 can detect an influence caused by a communication path on the basis of the actually received training signal. Specifically, the data signal equalization unit 38 generates a data signal in which the influence caused by the communication path is offset by reflecting a result of the training in the data signal received from the reception device 12.

The data signal generated by the data signal equalization unit 38 is provided to a likelihood calculation unit 40. The likelihood calculation unit 40 calculates likelihood for signal points on a constellation stored in the likelihood calculation unit 40 itself for a reception point indicated by the data signal. Then, a signal point at which the highest likelihood is obtained is recognized as a symbol intended by the reception point of this time.

A signal symbolized by the likelihood calculation unit 40 is provided to an information bit detection unit 42. The information bit detection unit 42 detects received bits from the symbolized signal. In addition, the information bit detection unit 42 may have an error correction decoding function or an interleaving function as necessary in accordance with the information bit generation unit 26.

### [Estimation of Error Rate]

As described above, the transmission device 10 of the present embodiment includes the error rate characteristic estimation unit 32. In a field of wireless communication, the symbol error rate SER or the bit error rate BER may be used as an index of communication quality. The error rate characteristic estimation unit 32 calculates SER or BER depending on content required as an evaluation index by a method described below, and provides a result of calculation to the transmission power control unit 28. Then, the transmission power control unit 28 sets the transmission power of the transmission device 10 so that SER or BER falls within a requirement threshold.

Fig. 6 illustrates an arithmetic expression (1) of the symbol error rate SER and an arithmetic expression (2) of the bit error rate BER. In these arithmetic expressions, "M" is the number of signal points constituting the constellation, and "m" is the number of bits of each signal point. For example, in the case of 64 QAM, the numbers are M = 64 and m = log₂M = 6.

As shown in the expression (1), SER = Ps is a function of "γs". In addition, as shown in the expression (2), BER = Pb is a function of "γb". An SNR for each symbol is represented by γs, and an SNR for each bit is represented by γb. Note that a relationship of γs = mγb is established between γs and γb.

SER = Ps(γs) can be approximately obtained by α_{M}Q(√(β_{M}γs)) using a Q function. BER = Pb(γb) can be approximately obtained by (α_{M}/m)Q(√(mβ_{M}γb)). In the expressions (1) and (2), "α_{M}" is the number of nearest points in the constellation. A value of the number is determined depending on the number of signal points included in the constellation, in other words, depending on the modulation scheme. For example, α_{M} = 2 is obtained in the case of QPSK, and α_{M} = 4 is obtained in the case of 16 QAM.

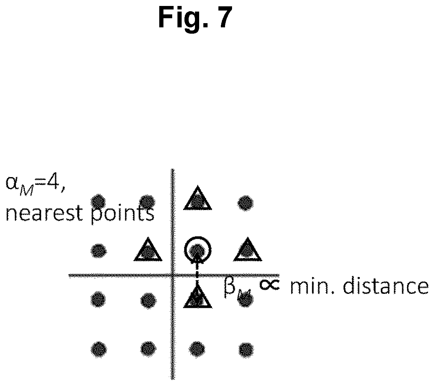

Fig. 7 illustrates a constellation of 16 QAM. In this case, a constellation is configured having four points in each quadrant, a total of M = 16 signal points. In this case, if a signal point indicated by ∘ in the figure is an attention point, as indicated by △ around the attention point, the number of nearest points "α_{M}" is four.

Fig. 7 also illustrates "β_{M}". As illustrated in this figure, β_{M} is a coefficient proportional to a minimum Euclidean distance in the constellation. That is, the expressions (1) and (2) illustrated in Fig. 6 indicate that the error rate (SER, BER) is determined when the constellation (α_{M}, β_{M}, m) and the SNR (γs, γb) are determined.

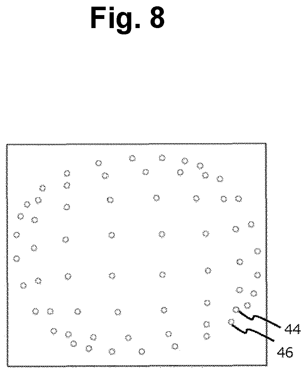

Fig. 8 is a diagram for explaining a concept of a minimum Euclidean distance in a constellation with distortion. When the transmission signal amplifier 22 uses the non-linear region, a signal point distance is compressed in a peripheral portion of the constellation as illustrated in Fig. 8. For example, a Euclidean distance between a signal point 44 and a signal point 46 illustrated in Fig. 8 is sufficiently shorter than a Euclidean distance between signal points existing near the center of the constellation. For this reason, in a case where the constellation with distortion is used, it is necessary to extract a minimum Euclidean distance from the constellation and calculate SER or BER by using β_{M} and the like corresponding to an extracted value of the minimum Euclidean distance.

In the present embodiment, if the transmission power is determined, the transmission device 10 can estimate a constellation formed by a signal to be actually transmitted regardless of whether the transmission power is in the linear region or the non-linear region. If the actually formed constellation is known, α_{M} and β_{M} achieved therein are known. Further, the transmission device 10 can acquire information on the SNR from the reception device 12. Then, the transmission device 10 can estimate SER and BER predicted to occur in the reception device 12 by applying these pieces of information to the expression (1) or (2).

### [Transmission Power Control]

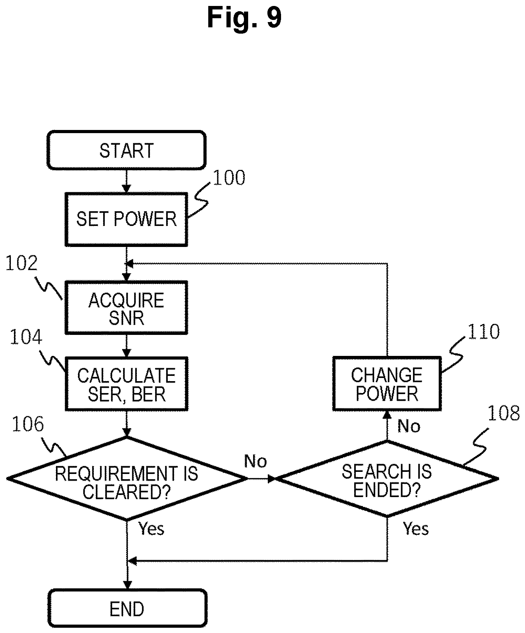

Fig. 9 is a flowchart for explaining a flow of processing executed by the transmission device 10 to calculate the error rates (SER, BER) in accordance with the above principle and control the transmission power in accordance with a result of calculation. Note that a routine illustrated in Fig. 9 is repeatedly activated at predetermined time intervals after communication is established between the transmission device 10 and the reception device 12.

In the routine illustrated in Fig. 9, first, an initial value of the transmission power used in the transmission signal amplifier 22 is set (step 100). When the processing of step 100 ends, the transmission device 10 emits a transmission signal with the set transmission power.

When receiving the signal from the transmission device 10, the reception device 12 calculates an SNR (γs, γb) on the basis of strength of the signal. Then, the calculated SNR is returned to the transmission device 10. The transmission device 10 acquires the SNR returned in this manner (step 102).

Next, the transmission device 10 calculates SER and BER that will be achieved under the current transmission power (step 104). Specifically, a constellation corresponding to the current transmission power is read, and α_{M} and β_{M} corresponding to the constellation are determined. Then, SER and BER are calculated by the expression (1) or (2) on the basis of the number of bits m unique to the modulation scheme, the SNR (γs, γb) acquired from the reception device 12, and α_{M} and β_{M} described above.

Next, it is determined whether or not the obtained error rate (SER, BER) clears a system requirement. That is, in a case where the wireless communication system uses SER as the evaluation index, it is determined whether SER is less than or equal to the requirement threshold. In addition, in a case where the wireless communication system uses BER as the evaluation index, it is determined whether BER is less than or equal to the requirement threshold.

As a result, in a case where it is determined that the error rate (SER, BER) clears the requirement, it can be determined that the current transmission power is appropriate. In this case, the routine of this time is ended in a state where the transmission power is maintained as power for communication.

On the other hand, in a case where it is determined in step 106 that the current error rate does not clear the requirement, it is determined whether or not search for all transmission powers possible is ended (step 108). For example, in a case where the transmission power is switchable in N levels, it is determined whether the processing of step 102 to 106 has been executed for all of the N levels.

As a result, in a case where it is determined that the search is ended for all the transmission powers, this routine is temporarily ended, and the processing of step 100 and subsequent steps is started again. On the other hand, in a case where it is determined that the search for all the transmission power is not ended, the transmission power is changed in accordance with a predetermined rule (step 110). Thereafter, the processing of step 102 and subsequent steps is repeated.

When the transmission power changes, the SNR in the reception device 12 changes, and magnitude of distortion superimposed on the constellation changes. According to the routine illustrated in Fig. 9, it is possible to find the transmission power at which the error rate (SER, BER) can clear the requirement. In other words, according to the present embodiment, as long as the error rate can be cleared, use of the transmission power belonging to the non-linear region can also be allowed. Therefore, according to the present embodiment, it is possible to efficiently achieve excellent communication quality by effectively utilizing the capability of the transmission signal amplifier 22 within a range in which erroneous recognition of data does not occur.

### [Features of Reception Device]

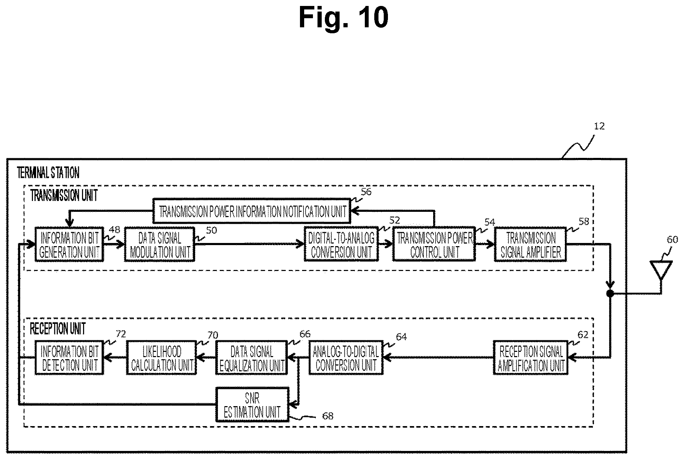

Fig. 10 is a block diagram for explaining a configuration of the reception device 12 in the present embodiment. The reception device 12 includes elements that function substantially similarly to the elements included in the transmission device 10 in many parts.

Specifically, a transmission unit of the reception device 12 has a configuration for functioning substantially similarly to the transmission unit of the transmission device 10. In addition, a reception unit of the reception device 12 has a configuration for functioning substantially similarly to the reception unit of the transmission device 10 except for an SNR estimation unit 68 and a likelihood calculation unit 70. Here, description of substantially common functions will be omitted, and feature points of the reception device 12 will be described in detail.

The SNR estimation unit 68 calculates an SNR of the signal received from the transmission device 10. The SNR estimated by the SNR estimation unit 68 is provided to an information bit generation unit 48 and then transmitted from the transmission unit of the reception device 12 to the transmission device 10.

The likelihood calculation unit 70 calculates a likelihood for a reception point on the basis of the transmission power used in the transmission device 10.

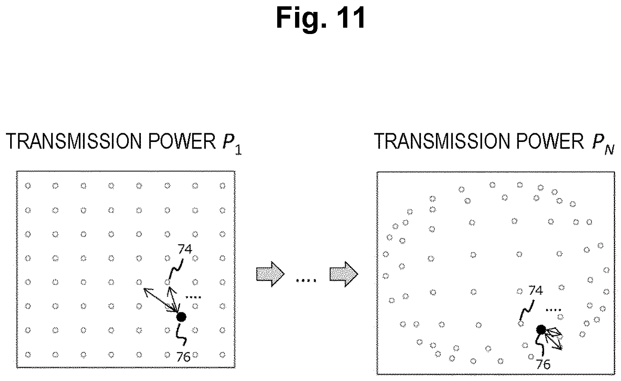

Fig. 11 is a diagram for explaining a function of the likelihood calculation unit 70. The left side of Fig. 11 illustrates an outline of likelihood calculation of a case where the transmission device 10 uses the transmission power P₁. In this case, the constellation of the reception signal has no distortion in which signal points 74 are correctly arranged in a lattice pattern. The likelihood calculation unit 70 refers to the constellation, and calculates, for some of the signal points 74 located in the vicinity of the reception point 76, a likelihood by using a normal distribution for a Euclidean distance between the reception point 76 and each signal point 74. Then, the signal point 74 at which the maximum likelihood is obtained is adopted as a symbol corresponding to the reception point 76.

The right side of Fig. 11 illustrates an outline of likelihood calculation of a case where the transmission device 10 uses the transmission power P_{N}. In this case, the constellation of the reception signal includes a deviation caused by the nonlinearity of the transmission signal amplifier 22 at each of the signal points 74. In this case, the likelihood calculation unit 70 calculates a likelihood for the reception point 76 by a method similar to the above by referring to the constellation with the deviation. Then, on the basis of a result of calculation, the symbol meant by the reception point 76 is specified.

As described above, in the present embodiment, the modulation scheme and the input-output characteristic of the transmission signal amplifier 22 are shared between the transmission device 10 and the reception device 12. In addition, the transmission device 10 successively provides information on the transmission power used for communication to the reception device 12. Then, as described with reference to Fig. 11, the reception device 12 performs likelihood calculation on the basis of the constellation reproduced depending on the transmission power.

As described above, in the present embodiment, the transmission device 10 is allowed to use the non-linear region of the transmission signal amplifier 22. Moreover, the transmission device 10 controls the transmission power so that the error rate (SER, BER) clears the requirement. Therefore, according to the present embodiment, it is possible to reliably avoid occurrence of an excessive error rate due to use of excessive transmission power.

Further, in the present embodiment, in a case where distortion occurs in the constellation, the reception device 12 performs likelihood calculation on the assumption of the distortion. Therefore, according to the present embodiment, in a case where the transmission device 10 uses the transmission power determined to be usable on the basis of the error rate (SER, BER), it is possible to effectively avoid occurrence of a situation in which data is erroneously recognized on responsibility of the reception device 12 side.

### [Modification of First Embodiment]

By the way, in the first embodiment described above, the search for the transmission power is ended when the transmission power at which the error rate (SER, BER) clears a desired requirement is found. However, the present disclosure is not limited thereto. For example, the search may be continued even after a condition that the error rate clears the requirement is found, and the transmission power with the smallest error rate may be found.

In addition, in the first embodiment described above, the transmission device 10 provides the specification of the transmission signal amplifier 22 to the reception device 12 at the start of wireless communication. However, the present disclosure is not limited thereto. For example, the transmission device 10 may be caused to store the reception device 12 to which the specification is provided, and the reception device 12 to which the specification is provided may be caused to store information on the specification. Then, transmission and reception of the above specification may be omitted for the second and subsequent communications between the base station 20 and the terminal station 22.

In addition, in the first embodiment described above, the transmission device 10 provides, to the reception device 12, information on the modulation scheme used for the wireless communication together with the specification of the transmission signal amplifier 22. However, the present disclosure is not limited thereto. For example, in a case where the modulation scheme used for communication between the transmission device 10 and the reception device 12 is determined in advance, provision of information on the modulation scheme can be omitted.

### Reference Signs List

- 10: Transmission device
- 12: Reception device
- 22: Transmission signal amplifier
- 26: Information bit generation unit
- 28: Transmission power control unit
- 30: Transmission power information notification unit
- 32: Error rate characteristic estimation unit
- 68: SNR estimation unit
- 70: Likelihood calculation unit

## Claims

1. A wireless communication transmission device (10) that performs wireless communication by using a single-carrier multi-value modulation scheme, the wireless communication transmission device (10) comprising:
a transmission signal amplifier (22) enabled to vary transmission power;
a transmission power control unit (28) that controls transmission power used by the transmission signal amplifier (22);
**characterised by**
an error rate characteristic estimation unit (32) that estimates an error rate of a reception signal in a reception device (12) of a communication partner; and
a reception unit that receives information on an SNR in the reception device (12), wherein
the error rate characteristic estimation unit (32) is configured to execute:
processing of estimating a constellation corresponding to the modulation scheme and reflecting a specification regarding an input-output characteristic of the transmission signal amplifier (22) on a basis of the transmission power; and
processing of estimating the error rate on a basis of a characteristic of the constellation and the SNR, and
the transmission power control unit is configured to execute processing of controlling the transmission power such that the error rate satisfies a predetermined requirement.

2. A wireless communication system comprising the transmission device (10) of claim 1 and a reception device (12) that perform wireless communication by using a single-carrier multi-value modulation scheme.

3. The wireless communication system according to claim 2, wherein
the transmission device (10) is configured to execute:
processing of providing the specification to the reception device; and
processing of providing information on transmission power used by the transmission signal amplifier to the reception device,
the reception device (12) includes:
an SNR estimation unit (68) that estimates the SNR on a basis of a data signal received;
a likelihood calculation unit (70) that calculates a likelihood for the data signal; and
an information bit detection unit that detects information bits from the data signal on a basis of a calculation result of the likelihood, and
the likelihood calculation unit (70) is configured to executes:
processing of estimating a constellation corresponding to the transmission power on a basis of the specification and the transmission power provided from the transmission device; and
processing of calculating likelihood for signal points included in the constellation, for the data signal.

4. The wireless communication system according to claim 2 or 3, wherein
the error rate characteristic estimation unit (32) is configured to estimate the error rate corresponding to transmission power every time the transmission power is set,
the transmission power control processing includes:
processing of setting an initial value for transmission power;
processing of determining whether or not the error rate corresponding to transmission power used by the transmission signal amplifier satisfies the requirement;
processing of maintaining the transmission power as being used for communication in a case where it is determined that the error rate satisfies the requirement; and
processing of setting the transmission power to a new value in a case where it is determined that the error rate does not satisfy the requirement.

5. The wireless communication system according to claim 2 or 3, wherein
the error rate characteristic estimation unit (32) is configured to estimate the error rate corresponding to transmission power every time the transmission power is set, and
the transmission power control processing includes:
processing of sequentially setting the transmission power to new values in an entire range possible for the transmission signal amplifier; and
processing of selecting transmission power indicating a best error rate as being used for communication when search is ended for the entire range.

6. A wireless communication method using a transmission device (10) and a reception device (12) that perform wireless communication by using a single-carrier multi-value modulation scheme,
the transmission device (10) including a transmission signal amplifier (22) enabled to vary transmission power,
the wireless communication method comprising:
a step, by the transmission device, of controlling the transmission power used by the transmission signal amplifier (22);
**characterised by**
a step, by the transmission device, of estimating an error rate of a reception signal in the reception device (12) of a communication partner;
a step, by the transmission device, of receiving information on an SNR in the reception device (12);
a step, by the transmission device, of estimating a constellation corresponding to the modulation scheme and reflecting a specification regarding an input-output characteristic of the transmission signal amplifier on a basis of the transmission power
a step, by the transmission device, of estimating the error rate on a basis of a characteristic of the constellation and the SNR, and
wherein the step, by the transmission device, of controlling the transmission power is such that the error rate satisfies a predetermined requirement.

7. The wireless communication method according to claim 6, further comprising:
a step, by the transmission device, of providing the specification to the reception device;
a step, by the transmission device, of providing information on transmission power used by the transmission signal amplifier to the reception device;
a step, by the reception device, of estimating a constellation corresponding to the transmission power on a basis of the specification and the transmission power;
a step, by the reception device, of calculating likelihood for signal points included in the constellation, for a data signal received; and
a step, by the reception device, of detecting information bits from the data signal on a basis of a calculation result of the likelihood.

8. The wireless communication method according to claim 6 or 7, further comprising:
a step, by the transmission device, of estimating the error rate corresponding to transmission power every time the transmission power is set;
a step, by the transmission device, of setting an initial value for transmission power;
a step, by the transmission device, of determining whether or not the error rate corresponding to transmission power used by the transmission signal amplifier satisfies the requirement;
a step, by the transmission device, of maintaining the transmission power as being used for communication in a case where it is determined that the error rate satisfies the requirement; and
a step, by the transmission device, of setting the transmission power to a new value in a case where it is determined that the error rate does not satisfy the requirement.

## Patentansprüche

1. Drahtlose Kommunikationsübertragungsvorrichtung (10), die drahtlose Kommunikation unter Verwendung von einem Einzelträger-Mehrwertmodulationsschema durchführt, wobei die drahtlose Kommunikationsübertragungsvorrichtung (10) Folgendes umfasst:
einen Übertragungssignalverstärker (22), der die Übertragungsleistung variieren kann;
eine Sendeleistungssteuereinheit (28), die die von dem Sendesignalverstärker (22) verwendete Sendeleistung steuert;
**gekennzeichnet durch**
eine Schätzeinheit für die Fehlerratencharakteristik (32), die eine Fehlerrate eines Empfangssignals in einer Empfangsvorrichtung (12) eines Kommunikationspartners schätzt; und
eine Empfangseinheit, die Informationen über ein SNR in der Empfangsvorrichtung (12) empfängt, wobei
die Schätzeinheit für die Fehlerratencharakteristik (32) dazu ausgebildet ist, Folgendes auszuführen:
Verarbeitung des Schätzens einer Konstellation, die dem Modulationsschema entspricht und eine Spezifikation bezüglich einer Ein-/Ausgangskennlinie des Sendesignalverstärkers (22) auf der Grundlage der Sendeleistung widerspiegelt; und
Verarbeitung des Schätzens der Fehlerrate auf der Grundlage einer Charakteristik der Konstellation und des SNR, und
die Sendeleistungssteuereinheit dazu ausgebildet ist, eine Verarbeitung des Steuerns der Sendeleistung derart auszuführen, dass die Fehlerrate eine vorbestimmte Anforderung erfüllt.

2. Drahtloses Kommunikationssystem, umfassend die Übertragungsvorrichtung (10) nach Anspruch 1 und eine Empfangsvorrichtung (12), die drahtlose Kommunikation unter Verwendung eines Einzelträger-Mehrwertmodulationsschemas durchführen.

3. Drahtloses Kommunikationssystem nach Anspruch 2, wobei die Übertragungsvorrichtung (10) dazu ausgebildet ist, Folgendes auszuführen: Verarbeitung des Bereitstellens der Spezifikation an die Empfangsvorrichtung; und
Verarbeitung des Bereitstellens von Informationen über die von dem Sendesignalverstärker verwendete Sendeleistung an die Empfangsvorrichtung,
wobei die Empfangsvorrichtung (12) Folgendes umfasst:
eine SNR-Schätzeinheit (68), die das SNR auf der Grundlage eines empfangenen Datensignals schätzt;
eine Likelihood-Berechnungseinheit (70), die eine Likelihood für das Datensignal berechnet; und
eine Informationsbit-Detektionseinheit, die Informationsbits aus dem Datensignal auf der Grundlage eines Berechnungsergebnisses der Likelihood detektiert, und
die Likelihood-Berechnungseinheit (70) dazu ausgebildet ist, Folgendes auszuführen: Verarbeitung des Schätzens einer Konstellation, die der Sendeleistung entspricht, auf der Grundlage der Spezifikation und der von der Übertragungsvorrichtung bereitgestellten Sendeleistung; und
Verarbeitung des Berechnens einer Likelihood für in der Konstellation enthaltene Signalpunkte für das Datensignal.

4. Drahtloses Kommunikationssystem nach Anspruch 2 oder 3, wobei
die Schätzeinheit für die Fehlerratencharakteristik (32) dazu ausgebildet ist, die der Sendeleistung entsprechende Fehlerrate jedes Mal zu schätzen, wenn die Sendeleistung eingestellt wird,
wobei die Sendeleistungssteuerverarbeitung Folgendes einschließt:
Verarbeitung des Einstellens eines Anfangswerts für die Sendeleistung;
Verarbeitung des Bestimmens, ob die der von dem Sendesignalverstärker verwendeten Sendeleistung entsprechende Fehlerrate die Anforderung erfüllt oder nicht;
Verarbeitung des Beibehaltens der Sendeleistung als für die Kommunikation verwendet in einem Fall, in dem bestimmt wird, dass die Fehlerrate die Anforderung erfüllt; und
Verarbeitung des Einstellens der Sendeleistung auf einen neuen Wert in einem Fall, in dem bestimmt wird, dass die Fehlerrate die Anforderung nicht erfüllt.

5. Drahtloses Kommunikationssystem nach Anspruch 2 oder 3, wobei
die Schätzeinheit für die Fehlerratencharakteristik (32) dazu ausgebildet ist, die der Sendeleistung entsprechende Fehlerrate jedes Mal zu schätzen, wenn die Sendeleistung eingestellt wird, und
wobei die Sendeleistungssteuerverarbeitung Folgendes einschließt:
Verarbeitung des sequenziellen Einstellens der Sendeleistung auf neue Werte in einem gesamten für den Sendesignalverstärker möglichen Bereich; und
Verarbeitung des Auswählens einer Sendeleistung, die eine beste Fehlerrate anzeigt, als für die Kommunikation verwendet, wenn die Suche für den gesamten Bereich beendet ist.

6. Drahtloses Kommunikationsverfahren unter Verwendung von einer Übertragungsvorrichtung (10) und einer Empfangsvorrichtung (12), die drahtlose Kommunikation unter Verwendung eines Einzelträger-Mehrwertmodulationsschemas durchführen,
wobei die Übertragungsvorrichtung (10) einen Sendesignalverstärker (22) einschließt, der dazu ausgebildet ist, die Sendeleistung zu variieren,
wobei das drahtlose Kommunikationsverfahren umfasst:
einen Schritt des Steuerns der von dem Sendesignalverstärker (22) verwendeten Sendeleistung durch die Übertragungsvorrichtung;
**gekennzeichnet durch**
einen Schritt des Schätzens einer Fehlerrate eines Empfangssignals in der Empfangsvorrichtung (12) eines Kommunikationspartners durch die Übertragungsvorrichtung;
einen Schritt des Empfangens von Informationen über ein SNR in der Empfangsvorrichtung (12) durch die Übertragungsvorrichtung;
einen Schritt des Schätzens einer Konstellation, die dem Modulationsschema entspricht und eine Spezifikation bezüglich einer Ein-/Ausgangskennlinie des Sendesignalverstärkers auf der Grundlage der Sendeleistung widerspiegelt, durch die Übertragungsvorrichtung
einen Schritt des Schätzens der Fehlerrate auf der Grundlage einer Charakteristik der Konstellation und des SNR durch die Übertragungsvorrichtung, und
wobei der Schritt des Steuerns der Sendeleistung durch die Übertragungsvorrichtung derart ist, dass die Fehlerrate eine vorbestimmte Anforderung erfüllt.

7. Drahtloses Kommunikationsverfahren nach Anspruch 6, weiter umfassend :
einen Schritt des Bereitstellens der Spezifikation an die Empfangsvorrichtung durch die Übertragungsvorrichtung;
einen Schritt des Bereitstellens von Informationen über die von dem Sendesignalverstärker verwendete Sendeleistung an die Empfangsvorrichtung durch die Übertragungsvorrichtung;
einen Schritt des Schätzens einer Konstellation, die der Sendeleistung entspricht, auf der Grundlage der Spezifikation und der Sendeleistung durch die Empfangsvorrichtung;
einen Schritt des Berechnens einer Likelihood für in der Konstellation enthaltene Signalpunkte für ein empfangenes Datensignal durch die Empfangsvorrichtung; und
einen Schritt des Detektierens von Informationsbits aus dem Datensignal auf der Grundlage eines Berechnungsergebnisses der Likelihood durch die Empfangsvorrichtung.

8. Drahtloses Kommunikationsverfahren nach Anspruch 6 oder 7, weiter umfassend:
einen Schritt des Schätzens der der Sendeleistung entsprechenden Fehlerrate jedes Mal, wenn die Sendeleistung eingestellt wird, durch die Übertragungsvorrichtung;
einen Schritt des Einstellens eines Anfangswerts für die Sendeleistung durch die Übertragungsvorrichtung;
einen Schritt des Bestimmens, ob die der von dem Sendesignalverstärker verwendeten Sendeleistung entsprechende Fehlerrate die Anforderung erfüllt oder nicht, durch die Übertragungsvorrichtung;
einen Schritt des Beibehaltens der Sendeleistung als für die Kommunikation verwendet in einem Fall, in dem bestimmt wird, dass die Fehlerrate die Anforderung erfüllt, durch die Übertragungsvorrichtung; und
einen Schritt des Einstellens der Sendeleistung auf einen neuen Wert in einem Fall, in dem bestimmt wird, dass die Fehlerrate die Anforderung nicht erfüllt, durch die Übertragungsvorrichtung.

## Revendications

1. Dispositif de transmission (10) de communication sans fil qui effectue une communication sans fil en utilisant un schéma de modulation multivaleur à porteuse unique, le dispositif de transmission (10) de communication sans fil comprenant :
un amplificateur de signal de transmission (22) apte à faire varier une puissance de transmission ;
une unité de commande de puissance de transmission (28) qui commande une puissance de transmission utilisée par l'amplificateur de signal de transmission (22) ;
**caractérisé par**
une unité d'estimation de caractéristique de taux d'erreur (32) qui estime un taux d'erreur d'un signal de réception dans un dispositif de réception (12) d'un partenaire de communication ; et
une unité de réception qui reçoit des informations sur un SNR dans le dispositif de réception (12), dans lequel
l'unité d'estimation de caractéristique de taux d'erreur (32) est configurée pour exécuter :
un traitement consistant à estimer une constellation correspondant au schéma de modulation et reflétant une spécification concernant une caractéristique d'entrée-sortie de l'amplificateur de signal de transmission (22) sur la base de la puissance de transmission ; et
un traitement consistant à estimer le taux d'erreur sur la base d'une caractéristique de la constellation et du SNR, et
l'unité de commande de puissance de transmission est configurée pour exécuter un traitement consistant à commander la puissance de transmission de telle sorte que le taux d'erreur satisfait à une exigence prédéterminée.

2. Système de communication sans fil comprenant le dispositif de transmission (10) selon la revendication 1 et un dispositif de réception (12) qui effectuent une communication sans fil en utilisant un schéma de modulation multivaleur à porteuse unique.

3. Système de communication sans fil selon la revendication 2, dans lequel le dispositif de transmission (10) est configuré pour exécuter : un traitement consistant à fournir la spécification au dispositif de réception ; et
un traitement consistant à fournir des informations sur une puissance de transmission utilisée par l'amplificateur de signal de transmission au dispositif de réception,
le dispositif de réception (12) inclut :
une unité d'estimation de SNR (68) qui estime le SNR sur la base d'un signal de données reçu ;
une unité de calcul de vraisemblance (70) qui calcule une vraisemblance pour le signal de données ; et
une unité de détection de bits d'information qui détecte des bits d'information à partir du signal de données sur la base d'un résultat de calcul de la vraisemblance, et
l'unité de calcul de vraisemblance (70) est configurée pour exécuter :
un traitement consistant à estimer une constellation correspondant à la puissance de transmission sur la base de la spécification et de la puissance de transmission fournie par le dispositif de transmission ; et
un traitement consistant à calculer une vraisemblance pour des points de signal inclus dans la constellation, pour le signal de données.

4. Système de communication sans fil selon la revendication 2 ou la revendication 3, dans lequel
l'unité d'estimation de caractéristique de taux d'erreur (32) est configurée pour estimer le taux d'erreur correspondant à une puissance de transmission chaque fois que la puissance de transmission est réglée,
le traitement de commande de puissance de transmission inclut :
un traitement consistant à définir une valeur initiale pour une puissance de transmission ;
un traitement consistant à déterminer si oui ou non le taux d'erreur correspondant à une puissance de transmission utilisée par l'amplificateur de signal de transmission satisfait à l'exigence ;
un traitement consistant à maintenir la puissance de transmission comme étant utilisée pour la communication dans le cas où il est déterminé que le taux d'erreur satisfait à l'exigence ; et
un traitement consistant à régler la puissance de transmission sur une nouvelle valeur dans le cas où il est déterminé que le taux d'erreur ne satisfait pas à l'exigence.

5. Système de communication sans fil selon la revendication 2 ou la revendication 3, dans lequel
l'unité d'estimation de caractéristique de taux d'erreur (32) est configurée pour estimer le taux d'erreur correspondant à une puissance de transmission chaque fois que la puissance de transmission est réglée, et
le traitement de commande de puissance de transmission inclut :
un traitement consistant à régler séquentiellement la puissance de transmission sur de nouvelles valeurs dans une plage entière possible pour l'amplificateur de signal de transmission ; et
un traitement consistant à sélectionner une puissance de transmission indiquant un meilleur taux d'erreur comme étant utilisée pour la communication lorsque la recherche est terminée pour la plage entière.

6. Procédé de communication sans fil utilisant un dispositif de transmission (10) et un dispositif de réception (12) qui effectuent une communication sans fil en utilisant un schéma de modulation multivaleur à porteuse unique,
le dispositif de transmission (10) incluant un amplificateur de signal de transmission (22) apte à faire varier une puissance de transmission,
le procédé de communication sans fil comprenant :
une étape, par le dispositif de transmission, consistant à commander la puissance de transmission utilisée par l'amplificateur de signal de transmission (22) ;
**caractérisé par**
une étape, par le dispositif de transmission, consistant à estimer un taux d'erreur d'un signal de réception dans le dispositif de réception (12) d'un partenaire de communication ;
une étape, par le dispositif de transmission, consistant à recevoir des informations sur un SNR dans le dispositif de réception (12) ;
une étape, par le dispositif de transmission, consistant à estimer une constellation correspondant au schéma de modulation et reflétant une spécification concernant une caractéristique d'entrée-sortie de l'amplificateur de signal de transmission sur la base de la puissance de transmission
une étape, par le dispositif de transmission, consistant à estimer le taux d'erreur sur la base d'une caractéristique de la constellation et du SNR, et
dans lequel l'étape, par le dispositif de transmission, consistant à commander la puissance de transmission est telle que le taux d'erreur satisfait à une exigence prédéterminée.

7. Procédé de communication sans fil selon la revendication 6, comprenant en outre :
une étape, par le dispositif de transmission, consistant à fournir la spécification au dispositif de réception ;
une étape, par le dispositif de transmission, consistant à fournir des informations sur une puissance de transmission utilisée par l'amplificateur de signal de transmission au dispositif de réception ;
une étape, par le dispositif de réception, consistant à estimer une constellation correspondant à la puissance de transmission sur la base de la spécification et de la puissance de transmission ;
une étape, par le dispositif de réception, consistant à calculer une vraisemblance pour des points de signal inclus dans la constellation, pour un signal de données reçu ; et
une étape, par le dispositif de réception, consistant à détecter des bits d'information à partir du signal de données sur la base d'un résultat de calcul de la vraisemblance.

8. Procédé de communication sans fil selon la revendication 6 ou la revendication 7, comprenant en outre :
une étape, par le dispositif de transmission, consistant à estimer le taux d'erreur correspondant à une puissance de transmission chaque fois que la puissance de transmission est réglée ;
une étape, par le dispositif de transmission, consistant à régler une valeur initiale pour une puissance de transmission ;
une étape, par le dispositif de transmission, consistant à déterminer si oui ou non le taux d'erreur correspondant à une puissance de transmission utilisée par l'amplificateur de signal de transmission satisfait à l'exigence ;
une étape, par le dispositif de transmission, consistant à maintenir la puissance de transmission comme étant utilisée pour la communication dans le cas où il est déterminé que le taux d'erreur satisfait à l'exigence ; et
une étape, par le dispositif de transmission, consistant à régler la puissance de transmission sur une nouvelle valeur dans le cas où il est déterminé que le taux d'erreur ne satisfait pas à l'exigence.
